# EUROPEAN PATENT APPLICATION

(11) **EP 1 833 208 A2**
(43) Date of publication of application: **12.09.2007**
(21) Application number: 07004818.6
(22) Date of filing: 08.03.2007
(51) Int. Cl.: H04L 12/56

(54) **Method and apparatus for triggering a new scheduling information transmission in a wireless communication system**

(30) Priority: 08.03.2006 US 767182 P
(71) Applicant: Innovative Sonic Limited, Tortola (VG)
(72) Inventor: Jiang, Sam, Shiaw-Shiang, Taipei City (TW)
(74) Representative: Schaeberle, Steffen

(57) **Abstract**

A method of triggering transmission of Scheduling Information (SI) used in a user end (UE) of a wireless communications system includes executing a hybird automatic repeat request (HARQ) process to transmit a packet containing scheduling information (302), and triggering transmission of a new SI when a number of transmissions of the packet containing SI is greater than or equal to a maximum number of transmissions, and the UE has not received an acknowledgement message corresponding to the packet containing SI. (304)

## Description

This application claims the benefit of the filing date of U.S. Provisional Patent Application No. 60/767, 182, filed on March 8, 2006 and entitled "Method and Apparatus for Triggering of Scheduling Information Retransmission", the contents of which are hereby incorporated by reference.
The present invention relates to a method of triggering a new SI transmission in wireless communications systems and related communications device according to the pre-characterizing clauses of claims 1 and 2.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

HSUPA increases upstream network performance, reduces transmission delay by rapid retransmission of erroneous data transmissions, and can adjust transmission rate based on channel quality. To realize this type of "power control," HSUPA adopts technologies such as NodeB Scheduling, Hybrid Automatic Repeat Request (HARQ), Soft Handover, and Short Frame Transmission. Correspondingly, the 3rd Generation Partnership Project (3GPP) defines an Enhanced Dedicated Transport Channel (E-DCH) for controlling operations of HSUPA. E-DCH introduces new physical layer channels, such as E-HICH, E-RGCH, E-AGCH, E-DPCCH, and E-DPDCH, which are used for transmitting HARQ ACK/NACK, Uplink Scheduling Information, Control Plane information, and User Plane information.
Detailed definitions of the above can be found in the Medium Access Control (MAC) protocol specification, "3GPP TS 25.321 V6.7.0," and are not given here. The MAC protocol specification defines in detail a method of operating E-DCH MAC-e/es, in which Change Request RP-060194 (http://www.3gpp.org/ftp/tsg_ran/tsg_ran/TSGR_31/Docs/RP-060194.zip) provides another realization for avoiding Scheduling Information (SI) loss, which targets automatic activation of SI retransmission in the user end (UE) HARQ Process (Section 11.8.1.1.2).

According to Change Request RP-060194, when generating a transmission, the UE HARQ Process will increment a status variable CURRENT_TX_NB by 1. The status variable CURRENT_TX_NB is used for indicating a number of times an E-DCH MAC-e PDU in an HARQ Buffer has been transmitted. When the status variable CURRENT_TX_NB is greater than a maximum number of transmissions indicated in an HARQ Profile, if the transmission containing SI is triggered, but the UE has not yet received an ACK/NACK from a Radio Link Set (RLS) containing a Serving Cell, the HARQ Process of the UE should notify a Scheduling Information Reporting Function that the HARQ Process failed to deliver the triggered SI to the RLS containing the Serving Cell so as to trigger a new SI transmission.

Thus, when a packet containing SI has already been transmitted the maximum number of transmissions, after the last transmission, the receiving end may or may not decode the packet, and according to Change Request RP-060194, the HARQ Process will notify the Scheduling Information Reporting Function that the HARQ Process failed to deliver the triggered SI to the RLS containing the Serving Cell, so as to trigger a new SI transmission. In other words, regardless of whether or not the UE receives the ACK/NACK corresponding to the last transmission of the packet, as long as the packet containing SI has been transmitted more than or equal to the maximum number of transmissions, the new SI transmission will be triggered. In this situation, because of a time delay that occurs between transmission of the packet and reception of the ACK/NACK, unnecessary transmission of the SI may occur, which wastes radio resources.

This in mind, the present invention aims at providing a method of triggering a new Scheduling Information (SI) transmission in a wireless communications system and related communications device that prevents unnecessary SI transmission to increase radio resource usage efficiency.

This is achieved by a method of triggering transmission of a new Scheduling Information (SI) used in a user end (UE) of a wireless communications system and related communications device according to claims 1 and 2. The dependent claims pertain to corresponding further developments and improvements.

As will be seen more clearly from the detailed description following below, the claimed method of triggering transmission of a new Scheduling Information (SI) used in a user end (UE) of a wireless communications system and related communications device includes triggering transmission of a new SI when a number of transmissions of the packet comprising SI is greater than or equal to a maximum number of transmissions, and the UE has not received an acknowledgement message corresponding to the packet comprising SI.
In the following, the invention is further illustrated by way of example, taking reference to the accompanying drawings. Thereof
Fig. 1 is a functional block diagram of a wireless communications device,
Fig. 2 is a diagram of program code in Fig. 1, and
Fig. 3 is a flow chart of a method according to the present invention.

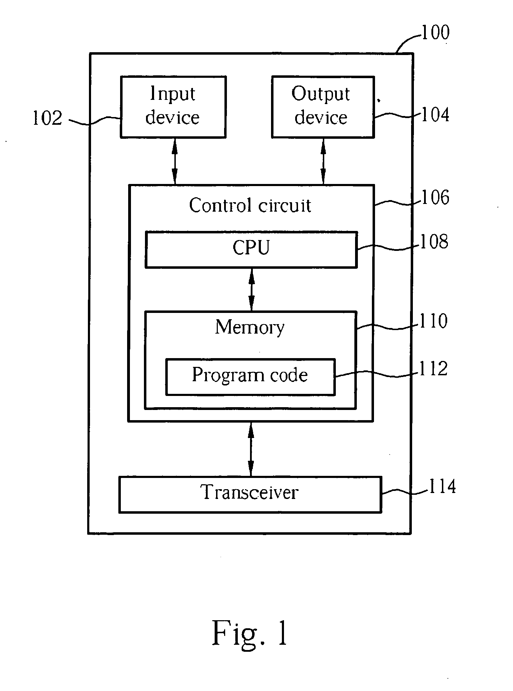

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112 , and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

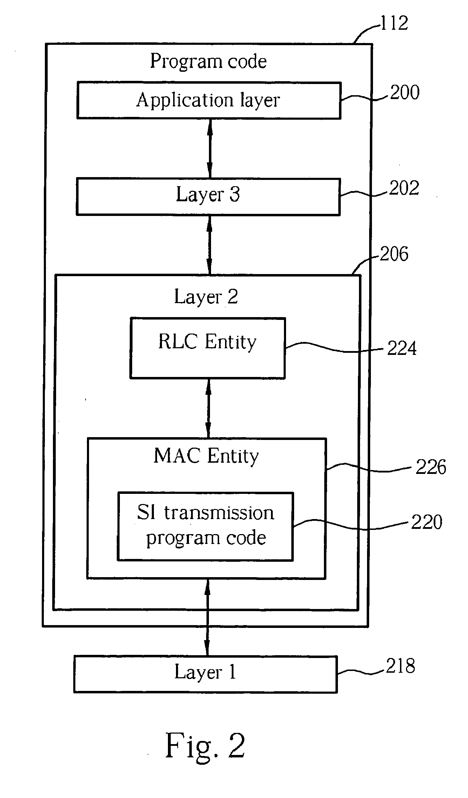

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, ciphering, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

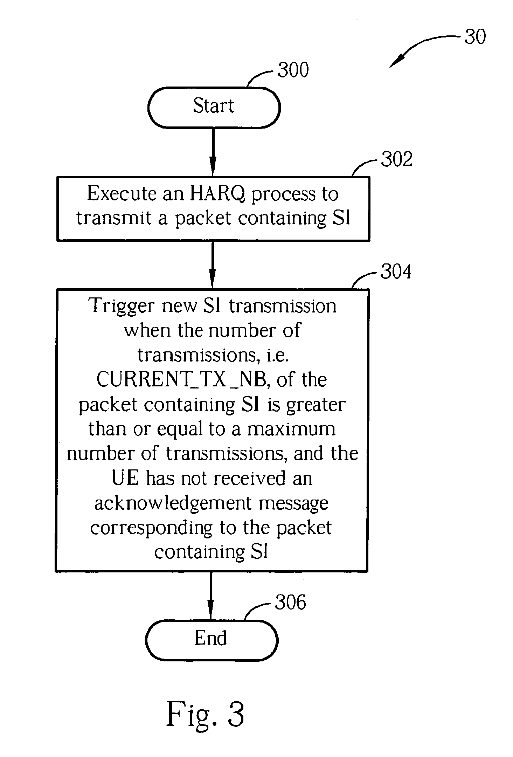

In some applications, such as when realizing high-speed uplink packet access (HSUPA) functions, the MAC entity 226 can execute a HARQ process, and retransmit packets based on transmission circumstances and trigger transmission of SI. In this situation, the present invention provides an SI transmission program code 220 utilized for timely triggering of a new SI transmission, in order to avoid radio resource waste, and reduce unnecessary transmissions. Please refer to Fig. 3, which is a flowchart diagram of a process 30 according to the present invention. The process 30 is utilized in the UE of the wireless communication system for triggering new SI transmission, comprises the following steps:
Step 300: Start.
Step 302: Execute an HARQ Process to transmit a packet containing SI.
Step 304: Trigger new SI transmission when the number of transmissions, i.e. CURRENT_TX_NB, of the packet containing SI is greater than or equal to a maximum number of transmissions, and the UE has not received an acknowledgement message corresponding to the packet containing SI.
Step 306: End.

According to the process 30, when the number of transmissions of the packet containing SI by the HARQ process is greater than or equal to the maximum number of transmissions, but the UE has not yet received the acknowledgement message corresponding to the packet containing SI, the HARQ Process will trigger a new SI transmission. Namely, when the status variable CURRENT_TX_NB is greater than or equal to the maximum number of transmissions indicated by the HARQ Profile, and the UE has not yet received an acknowledged message through an E-DCH HARQ Acknowledgement Indicator Channel (E-HICH) from an RLS containing a service cell, the HARQ process will notify an SI reporting function that the HARQ process failed to deliver the triggered SI to the RLS containing the service cell, so as to trigger a new SI transmission. Furthermore, the SI reporting function may require the packet comprising SI to contain multiplexed higher layer data before it triggers a new SI transmission.

Thus, through the present invention process 30, the HARQ process triggers the new SI transmission when the UE confirms failure to receive the acknowledgement message corresponding to the last transmission of the packet containing SI. In this way, the HARQ process can avoid unnecessary SI transmission, which increases usage efficiency of the radio resources.

## Claims

1. A method of triggering transmission of a new Scheduling Information (SI) used in a user end (UE) of a wireless communications system comprising:
executing a hybrid automatic repeat request (HARQ) process to transmit a packet comprising SI; (302)
**characterized by** triggering retransmission of a new SI when a number of transmissions of the packet comprising SI is greater than or equal to a maximum number of transmissions, and the UE has not received an acknowledgement message corresponding to the packet comprising SI. (304)

2. A communications device (100) of a wireless communications system utilized for timely transmission of a new Scheduling Information (SI) to avoid radio resource waste comprising:
a control circuit (106) for realizing functions of the communications device (100);
a processor (108) installed inside the control circuit (106), for executing a program code (112) to command the control circuit (106); and
a memory (110) coupled to the processor (108), for storing the program code (112);
wherein the program code (112) comprises:
executing a hybrid automatic repeat request (HARQ) process to transmit a packet comprising SI;
**characterized by** the program code (112) triggering transmission of a new SI when a number of transmissions of the packet comprising SI is greater than or equal to a maximum number of transmissions, and the UE has not received an acknowledgement message corresponding to the packet comprising SI.

3. The method of claim 1 and the communications device of claim 2, **characterized in that** the packet comprising SI contains multiplex higher layer data.

4. The method of claim 1 and the communications device of claim 2, **characterized in that** the maximum number of transmission is recorded in an HARQ profile.

5. The method of claim 1 and the communications device of claim 2, **characterized in that** the acknowledgement message comprises an acknowledged protocol data unit (ACK PDU) or a negatively-acknowledged PDU (NACK PDU).

6. The method of claim 1 and the communications device of claim 2, **characterized in that** the acknowledgement message is transmitted by a radio link set (RLS) comprising a serving cell.

7. The method of claim 1 and the communications device of claim 2, **characterized in that** the acknowledgement message is transmitted through an enhanced dedicated channel (E-DCH) HARQ acknowledgement indicator channel (E-HICH).

8. The method of claim 1 and the communications device of claim 2, **characterized in that** the HARQ process notifies a scheduling information reporting function to trigger a new SI transmission when the HARQ process failed to deliver the triggered SI.

9. The method of claim 1 and the communications device of claim 2, **characterized in that** the wireless communications system is a high speed uplink packet access system of a third generation (3G) mobile communications system.
